# EUROPEAN PATENT SPECIFICATION

(11) **EP 3 796 085 B1**
(45) Date of publication and mention of the grant of the patent: **05.06.2024**
(21) Application number: 19803284.9
(22) Date of filing: 12.04.2019
(51) Int. Cl.: G03B 17/55, B60R 1/00, B60R 11/02, G03B 35/08, G03B 30/00, H04N 23/52

(54) **CAMERA DEVICE**
KAMERAVORRICHTUNG
DISPOSITIF POUR APPAREIL DE PRISE DE VUES

(30) Priority: 14.05.2018 JP 2018092917
(43) Date of publication of application: 24.03.2021
(73) Proprietor: Hitachi Astemo, Ltd., Hitachinaka-shi, Ibaraki 312-8503 (JP)
(72) Inventor: KATOU, Seiichi, Tokyo 100-8280 (JP); KAZAMA, Atsushi, Tokyo 100-8280 (JP); MASUDA, Keisuke, Hitachinaka-shi, Ibaraki 312-8503 (JP)
(74) Representative: MERH-IP Matias Erny Reichl Hoffmann Patentanwälte PartG mbB
(86) International application number: PCT/JP2019/015904
(87) International publication number: WO 2019/220826

(56) References cited:
- EP-A1- 3 054 348
- EP-A1- 3 139 718
- WO-A1-2017/163584
- CN-U- 205 263 465
- CN-U- 206 865 924
- DE-A1-102012 005 726
- US-A1- 2015 260 391
- US-A1- 2016 129 839

## Description

### Technical Field

The present invention relates to a camera device.

### Background Art

In recent years, there has been proposed a driving support system of mounting an imaging device on a vehicle, providing a driver with information for safe driving based on the environmental data, of the surroundings when the vehicle is traveling, acquired by the imaging device (so-called camera device), and automatically performing vehicle control. A stereo camera device including a stereo camera is known, for example, as a camera device used for such a driving support system. The stereo camera device recognizes vehicles, pedestrians, objects, etc. around its own vehicle from the images obtained by the pair of imaging elements installed on the left and right, measures the distance to the object, and performs control such as automatic brake control based on the measured distance information in the driving support system.

In the camera device, the signal processing amount is increased due to the widening of the viewing angle of the camera and the increase in the recognition object, the power consumption is increasing, and the temperature due to the heat generation due to the power consumption is also increasing. In addition, it is often installed in the vicinity of the windshield for the purpose of recognizing an object in front of the vehicle, and the temperature is likely to rise due to sunlight or heat generation inside the device. When the temperature of the internal components exceeds the upper limit temperature, there is concern that malfunctions may occur and the life of the components may be shortened. Also, when the temperature changes, the relative arrangement of the pair of left and right cameras changes due to thermal deformation of the housing of the camera device, resulting in parallax deviation, which reduces the accuracy of measurement results such as the distance to the object.

As a technology related to heat dissipation of such a camera device, for example, PTL 1 discloses an imaging unit including two imaging devices, a board holding unit that holds a circuit board on which a component related to the operation of the two imaging devices are disposed, and a heat transfer unit that transfers the heat generated by the component to the board holding unit, where one end of the heat transfer unit is in contact with the component, and the other end of the heat transfer unit is in contact with the board holding unit on a line located equidistant from the respective imaging element of the two imaging devices.
PTL 2 shows a housing for enclosing at least one electronic component of a motor vehicle and a method of mounting a housing. Further, the housing of PTL 2 describes at least a first metal housing part with a first circumferential connection surface and a second metal housing part with a second circumferential connection surface. In Detail, the metal housing parts of PTL2 are designed to be connected to each other along a connection direction.
PTL3 shows a stereo camera for a vehicle. Further, the stereo camera of PTL3 describes a first lens, a first image sensor for capturing a first image on the basis of incident light introduced through the first lens. Furthermore, the stereo camera of PTL3 describes a second lens, a second image sensor for capturing a second image on the basis of incident light introduced through the second lens and a processor for processing the first image and the second image.

### Citation List

### Patent Literature

PTL 1: JP 2016-177257 A
PTL 2: EP 3 139 718 A1
PTL 3: EP 3 054 348 A1

### Summary of Invention

### Technical Problem

In the above-mentioned conventional technique, the operation disorder is suppressed by suppressing the uneven heat distribution in the imaging unit. However, in the configuration in which the heat transfer unit that transfers the heat from the circuit element to the board holding unit is used, the length of the heat transfer unit, which is the heat transfer path, is long, so that the thermal resistance is large. Therefore, for example, the vehicle body such as the windshield where the camera device is installed rises in temperature due to sunlight. When there is not a sufficient temperature difference between the vehicle body and the camera device, or when the temperature of the vehicle body is higher than that of the camera device, it is conceivable that the effect of heat dissipation cannot be sufficiently obtained and the temperature rise of the camera device cannot be suppressed. Further, it may not be possible to sufficiently suppress the excessive temperature rise of the camera device and the thermal deformation of the housing simply by suppressing the uneven heat distribution.

The present invention has been made in view of the above, and an object of the present invention is to provide a camera device capable of suppressing a temperature rise and a thermal deformation of a housing.

### Solution to Problem

The present application includes a plurality of means for solving the above problems. The above object is achieved by the subject-matter of the independent claim. Further preferred developments are described by the dependent claims. In particular, an object of the present invention of a camera device includes at least one camera module, a circuit board having a function of processing an image captured by the camera module, a case that integrally contains the camera module and the circuit board along at least the circuit board, a plurality of first ribs formed so as to extend along a direction perpendicular to an optical axis of the camera module and so as to have a portion lower than an end close to the camera module where the plurality of first ribs is disposed on a face along the circuit board outside the case, and a plurality of second ribs formed so as to intersect with the plurality of first ribs.

### Advantageous Effects of Invention

According to the present invention, temperature rise and thermal deformation of the housing can be suppressed.

### Brief Description of Drawings

[FIG. 1] FIG. 1 is an upper perspective view showing the external appearance of a camera device according to a first embodiment.
[FIG. 2] FIG. 2 is a sectional view taken along line A-A in FIG. 1.
[FIG. 3] FIG. 3 is a top view showing the external appearance of a camera device according to the related art.
[FIG. 4] FIG. 4 is a sectional view taken along line B-B in FIG. 3.
[FIG. 5] FIG. 5 is a sectional view taken along line C-C in FIG. 3.
[FIG. 6] FIG. 6 is a rear view showing a mode in which the camera device according to the related art is bent in the vertical direction.
[FIG. 7] FIG. 7 is a rear view showing a mode in which the camera device according to the related art is bent in the front-rear direction.
[FIG. 8] FIG. 8 is an upper perspective view of a camera device according to the related art shown as a first comparative example.
[FIG. 9] FIG. 9 is a sectional view taken along line D-D in FIG. 8.
[FIG. 10] FIG. 10 is an upper perspective view of a camera device according to the related art shown as a second comparative example.
[FIG. 11] FIG. 11 is a sectional view taken along line E-E in FIG. 10.
[FIG. 12] FIG. 12 is an upper perspective view of a camera device according to the related art shown as a third comparative example.
[FIG. 13] FIG. 13 is a sectional view taken along line F-F in FIG. 12.
[FIG. 14] FIG. 14 is a diagram comparing the simulation result of heat dissipation of the camera device according to the first embodiment and the camera devices according to the related art shown as the first to third comparative examples.
[FIG. 15] FIG. 15 is a diagram comparing rigidity simulation results of the camera device according to the first embodiment and the camera devices according to the related art shown as the first to third comparative examples.
[FIG. 16] FIG. 16 is an upper perspective view showing the external appearance of a camera device according to a second embodiment.
[FIG. 17] FIG. 17 is a sectional view taken along line G-G in FIG. 16.
[FIG. 18] FIG. 18 is a vertical cross-sectional view schematically showing a camera device according to a third embodiment.
[FIG. 19] FIG. 19 is a top view schematically showing a camera device according to a fourth embodiment.
[FIG. 20] FIG. 20 is a top view schematically showing a camera device according to a fifth embodiment.
[FIG. 21] FIG. 21 is a top view schematically showing a camera device according to a sixth embodiment.
[FIG. 22] FIG. 22 is a top view schematically showing a camera device according to a seventh embodiment.
[FIG. 23] FIG. 23 is a top view schematically showing a camera device according to an eighth embodiment.
[FIG. 24] FIG. 24 is an upper perspective view showing the external appearance of a camera device according to an example not part of the invention.
[FIG. 25] FIG. 25 is a sectional view taken along line H-H in FIG. 24.

### Description of Embodiments

Hereinafter, embodiments of the present invention will be described with reference to the drawings.

### <First embodiment>

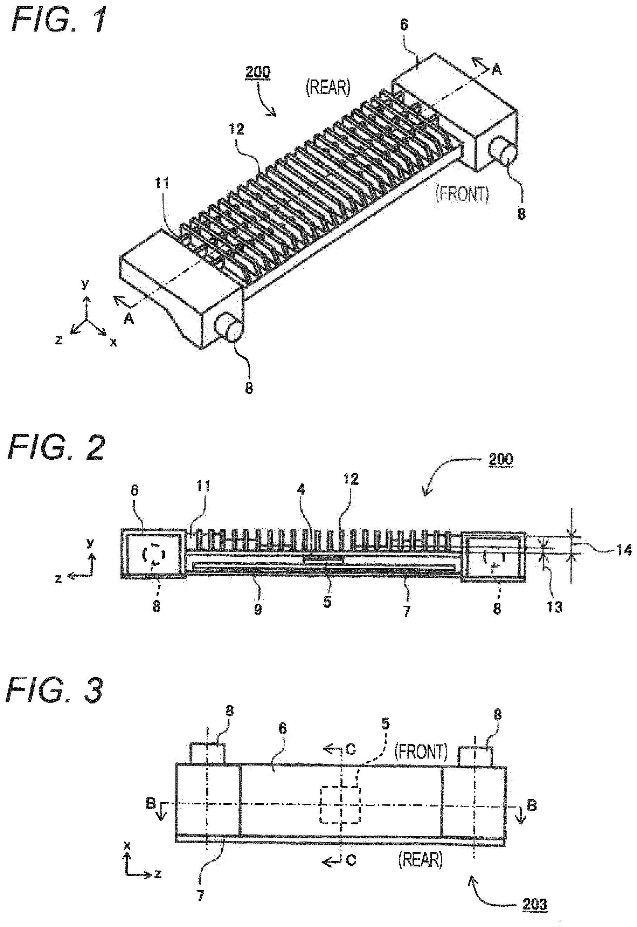

A first embodiment of the present invention will be described with reference to FIGS. 1 and 2.

FIGS. 1 and 2 are diagrams showing the external appearance of the camera device according to the present embodiment, FIG. 1 is an upper perspective view, and FIG. 2 is a sectional view taken along line A-A in FIG. 1. In addition, in FIG. 1 and FIG. 2, the description will be made with an orthogonal coordinate system set in which the x-axis is the front-rear direction (the optical axis direction of the camera module) of the camera device 200 with the front direction as positive, the y-axis is the vertical direction with the upward direction as positive, and the x-axis is the left-right direction with the right direction as positive, and the z-axis is the direction perpendicular to the plane (the zy plane) defined by the x-axis and the y-axis with the right direction as positive.

As shown in FIGS. 1 and 2, the camera device 200 includes at least one (in the present embodiment, an example of the two consisting of a pair of left and right camera modules) camera modules 8 and 8, a circuit board 9 having a function of processing an image captured by the camera modules 8 and 8, and a case (a first case 6 and a second case 7) integrally containing the camera modules 8 and 8 and the circuit board 9 along at least the circuit board 9.

The circuit board 9 is a plate-like member that is disposed with the respective faces facing each other in vertical direction, and the pair of left and right camera modules 8 and 8 is respectively disposed at the ends in the left-right direction (direction along the z axis).

At least one (one in the present embodiment) circuit element 5 (signal processing element) that calculates the parallax of the object in the pair of images captured by the pair of left and right camera modules 8 and 8, and performs image processing for obtaining the distance to the object from the parallax is disposed on either one face of the circuit board 9.

The camera modules 8 and 8 each include an imaging element, and are disposed with their optical axes oriented in the imaging direction (here, front in the x-axis direction).

The circuit element 5 is a microcomputer that processes image signals, a signal processing element, a field programmable gate array (FPGA), or the like, and refers to an element (heat generating component) generating a large amount of heat which requires heat conduction to the first case 6 and the second case 7. That is, the circuit element 5 mounted on the upper face of the circuit board 9 is a heat generating component, and is thermally connected to the first case 6 via a heat conducting member 4 such as a heat dissipation gel. In the present embodiment, the case where the circuit element 5 is mounted on the upper face of the circuit board 9 at the center between the pair of left and right camera modules 8 and 8 will be described as an example.

The circuit board 9 is contained by a case including the first case 6 that covers the pair of left and right camera modules 8 and 8 and the circuit board 9 from above and the second case 7 that covers the circuit board 9 from below. The second case 7 is fixed to the first case 6 with, for example, a screw.

The electrical connection of the circuit board 9 including the pair of left and right camera modules 8 and 8 and the circuit element 5 with the outside (connection for supplying power, and transmitting and receiving a signal) is, for example, implemented by connecting wiring to an electric connector (not shown) provided on the circuit board 9 through the opening (not shown) of the rear face of the first case 6.

A plurality of first ribs 11 is formed on the face (upper face) along the circuit board 9 outside the first case 6 so as to extend along the direction perpendicular to the optical axis of the pair of left and right camera modules 8 and 8 and the direction (the z-axis direction) along the straight line passing through the pair of left and right camera modules 8 and 8, and to have a height, from the first case 6, that is the lowest between the pair of left and right camera modules 8 and 8 as the first ribs 11 are away from the camera modules 8 and 8.

More specifically, the plurality of first ribs 11 is plate-shaped reinforcing members formed so as to rise from the upper face of the first case 6, is disposed side by side at equal intervals in the front-rear direction (the x-axis direction) of the camera device 200, and has heights, from the first case 6, that are lowered stepwise toward the position where the circuit element 5 is disposed. That is, the first ribs 11 are formed stepwise so that a height 13 from the first case 6 at a position (here, a position toward the circuit element 5 relative to a position at the left-right center of the camera device 200) away from the camera modules 8 and 8 is lower than a height 14 at a position close to the pair of left and right camera modules 8 and 8.

In the present embodiment, the case where the first rib 11 is not provided in the vicinity of the circuit element 5, that is, the height is 0 (zero), is described as an example, but the invention is not limited to this, and the height may be lowered as the first ribs 11 are away from the camera modules 8 and 8. That is, for example, the first ribs 11 are formed to have heights that are lowered as they are away from the camera modules 8 and 8, and have the lowest and constant height in the vicinity of the circuit element 5.

A plurality of second ribs 12 is formed on the face (upper face) along the circuit board 9 outside the first case 6 so as to intersect with the plurality of first ribs 11.

More specifically, the plurality of second ribs 12 is plate-shaped reinforcing members formed so as to rise from the upper face of the first case 6, is formed so as to extend along the front-rear direction (the x-axis direction) of the camera device 200, and is disposed side by side at equal intervals in the left-right direction (the z-axis direction) of the camera device 200.

The operations and effects of the embodiment configured as described above will be described in comparison with the related art.

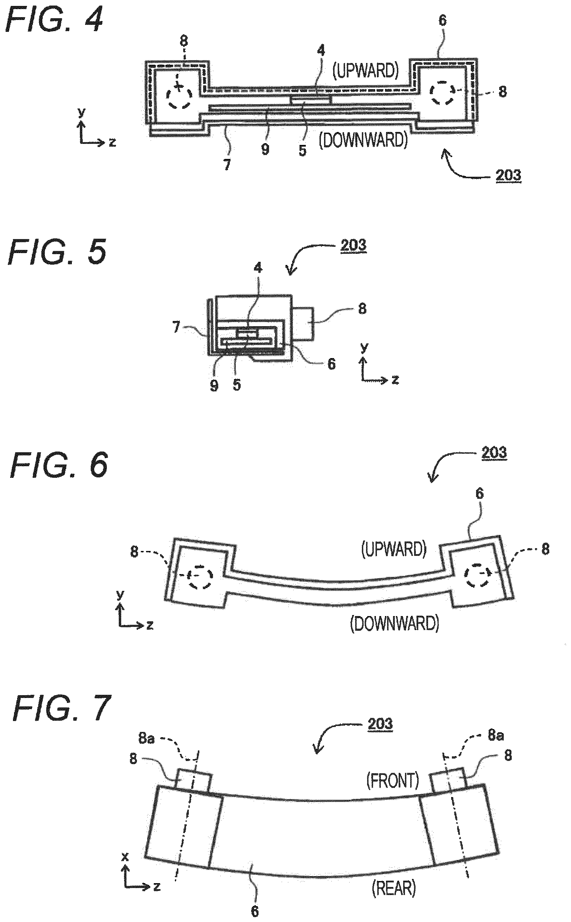

FIGS. 3 to 5 are diagrams showing a camera device according to the related art, FIG. 3 is a top view, FIG. 4 is a sectional view taken along line B-B in FIG. 3, and FIG. 5 is a sectional view taken along line C-C in FIG. 3.

In FIGS. 3 to 5, a camera device 203 includes the camera modules 8 and 8 having a pair of imaging elements at both ends of the first case 6, and the circuit board 9 on which the circuit element 5 for processing signals from the camera modules 8 and 8 is mounted, and has a configuration in which the second case 7 covering the lower face is attached to the first case 6 by using screws or the like. The circuit element 5 is thermally connected to the first case 6 via the heat conducting member 4.

In the camera device 203 according to the related art, when the temperature rises due to environmental temperature rise or device heat generation, by the difference in linear expansion coefficient between the members constituting the camera device 203, for example, bending in the vertical direction (the y-axis direction) or the front-rear direction (the x-axis direction) with respect to the longitudinal direction (the direction along the straight line passing through the camera modules 8 and 8 (the z-axis direction)) that has the least rigidity in the camera device 203 occurs.

FIG. 6 is a rear face view showing a mode in which the camera device according to the related art is bent in the vertical direction, and FIG. 7 is a top view showing a mode in which the camera device is bent in the front-rear direction.

In the camera device 203, the first case 6 and the second case 7 may have different expansion coefficients even when the same material is used due to differences in manufacturing methods. For example, when the first case 6 is manufactured by die casting and the second case 7 is manufactured by rolling, there is a subtle difference in linear expansion coefficients of them. When temperature (environmental temperature or temperature due to device heat generation) is applied to the camera device 203, the camera device 203 is bent in the vertical direction (the y-axis direction) due to the difference in linear expansion coefficient between the first case 6 and the second case 7 as shown in FIG. 6.

Further, in the camera device 203, the rigidity of the rear face of the first case 6 may be weaker than the rigidity of the front face of the first case 6 due to, for example, an opening for wiring to an electric connector (not shown) on the rear face. With the vertical (the y-axis direction) bending of the camera device 203, bending also occurs in the front-rear direction (the x-axis direction) of the camera device 203 due to the difference in rigidity between the front and rear faces of the first case 6 as shown in FIG. 7, and the optical axis 8a of the camera modules 8 and 8 tilt in the y-axis rotation direction (yaw direction).

When the camera modules 8 and 8 tilt in the yaw direction, an error occurs in the calculation result of the distance to the object using the pair of left and right image information. That is, in the calculation of the distance to the object, the feature point common to each other's images is extracted from the pair of left and right image information, the distance is calculated using the number of pixels in which the position of the feature point is displaced between the pair of images due to tilting of the camera modules 8 and 8 in the yaw direction, and a deviation (so-called parallax deviation) other than the original deviation of the number of pixels due to the distance between the optical axes occurs, resulting in an error in the distance measurement result of the object. Therefore, it is necessary to reduce the parallax deviation in order to suppress the system deterioration of the measurement result of the distance to the object.

Although the bending due to the difference in linear expansion coefficient between the first case 6 and the second case 7 is shown as a factor of the parallax deviation, the parallax deviation similarly occurs due to bending due to a difference in linear expansion coefficient between the first case 6 and the circuit board 9, or other components. Further, even when the components having the same linear expansion coefficient are used, the bending occurs due to the temperature distribution generated when the camera device 203 is driven, so that the parallax deviation similarly occurs. It is considered that the parallax deviation may occur due to bending due to another external force other than the temperature difference. Therefore, it is necessary to improve the rigidity in order to suppress the parallax deviation of the camera device 203 and improve the reliability.

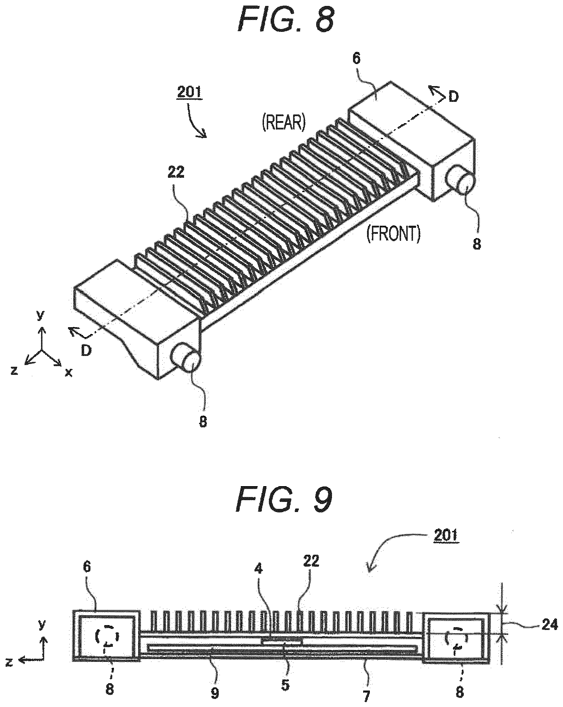

FIG. 8 is an upper perspective view of a camera device according to the related art shown as a first comparative example. Further, FIG. 9 is a cross-sectional view taken along line D-D in FIG. 8.

In FIGS. 8 and 9, a camera device 201 includes, on the upper face of the first case 6, ribs 22 that extend along the front-rear direction of the camera device 201 (the x-axis direction), and that are disposed side by side at equal intervals in the left-right direction (the z-axis direction) of the camera device 201. The ribs 22 of the camera device 201 are disposed on the z-x plane (the upper face of the first case 6) where a large heat radiation area can be secured so that the heat dissipation effect works effectively. Further, the rib 22 has a small air resistance to the air flow in the front-rear direction (the x-axis direction) expected in the installation environment of the camera device 201, and extends in the x-axis direction capable of increasing the flow rate of air to enable effective heat dissipation. It is conceivable to form ribs so as to extend in the vertical direction (the y-axis direction) of the camera device 201, but the camera device 201 has a large thickness, and a vehicle ceiling above the camera device 201 hampers the flow of air, so that the ribs 22 have a height 24 formed so as to be limited to the upper face of the camera modules 8 and 8, and extend in the optical axis direction (the z-axis direction) of the camera modules 8 and 8 in order to be effective for heat dissipation effect. However, although the heat dissipation is improved by the addition of the ribs 22, the camera device 201 has the increased mass of the added ribs 22, so that there is a concern about lack of rigidity.

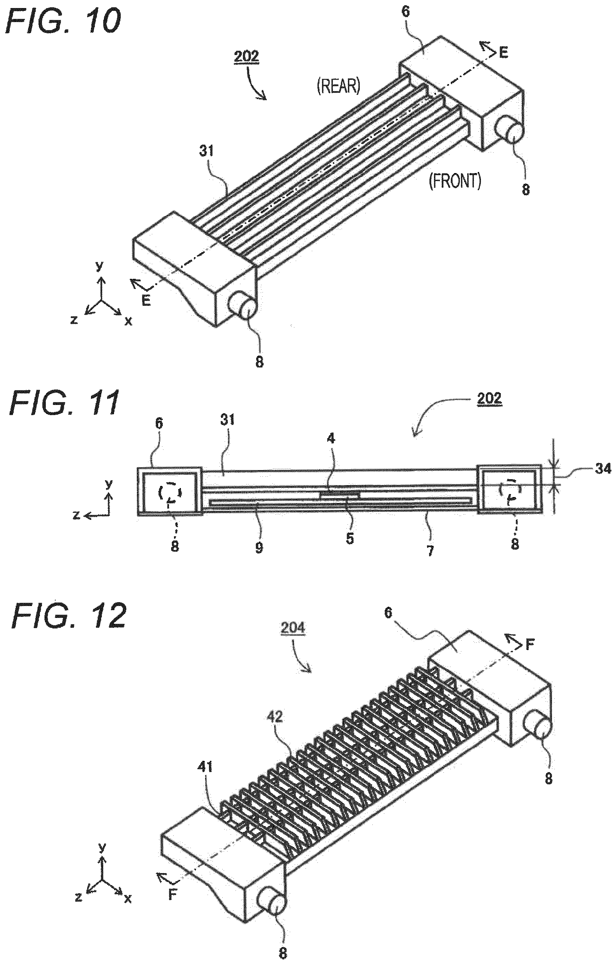

FIG. 10 is an upper perspective view of a camera device according to the related art shown as a second comparative example. Further, FIG. 11 is a cross-sectional view taken along line E-E in FIG. 10.

In FIGS. 10 and 11, a camera device 202 includes, on the upper face of the first case 6, ribs 31 that extend along the left-right direction of the camera device 202 (the z-axis direction), and that are disposed side by side at equal intervals in the front-rear direction (the x-axis direction) of the camera device 202. Since the rigidity of the camera device 202 is the lowest in the direction in which the dimension of the external appearance of the camera device 202 is large (the direction along the straight line passing through the camera modules 8 and 8 (the z-axis direction)), the ribs 31 are formed so as to extend in the z-axis direction where effective improvement in rigidity of the camera device 202 can be expected. The ribs 31, similarly to the ribs 22 of the first comparative example, have a height 34 which is limited to about the upper face of the camera module 8, 8 and extend in the left-right direction (the z-axis direction) of the camera modules 8 and 8. However, in the camera device 202, the rib 31 having the height 34 is an obstacle that hampers the air flow in the front-rear direction, so that the heat dissipation is deteriorated.

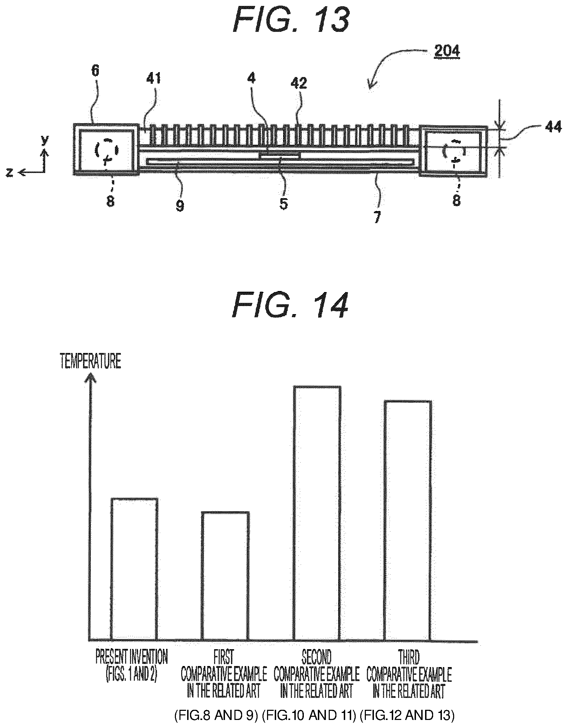

FIG. 12 is an upper perspective view of a camera device according to the related art shown as a third comparative example. FIG. 13 is a sectional view taken along line F-F in FIG. 12. The third comparative example is a combination of the first comparative example and the second comparative example.

In FIGS. 12 and 13, the camera device 203 includes, on the upper face of the first case 6, ribs 42 that extend along the front-rear direction (the x-axis direction) of the camera device 203, and that are disposed side by side at equal intervals in the left-right direction (the z-axis direction) of the camera device 203, and ribs 41 that extend along the left-right direction (the z-axis direction) of the camera device 203, and that are disposed side by side at equal intervals in the front-rear direction (the x-axis direction) of the camera device 203. The rigidity of the camera device 203 is enhanced by the ribs 42 formed so as to extend in the z-axis direction. However, in the camera device 203, the ribs 31 having the height 34 are an obstacle that hampers the air flow in the front-rear direction, so that the heat dissipation is deteriorated.

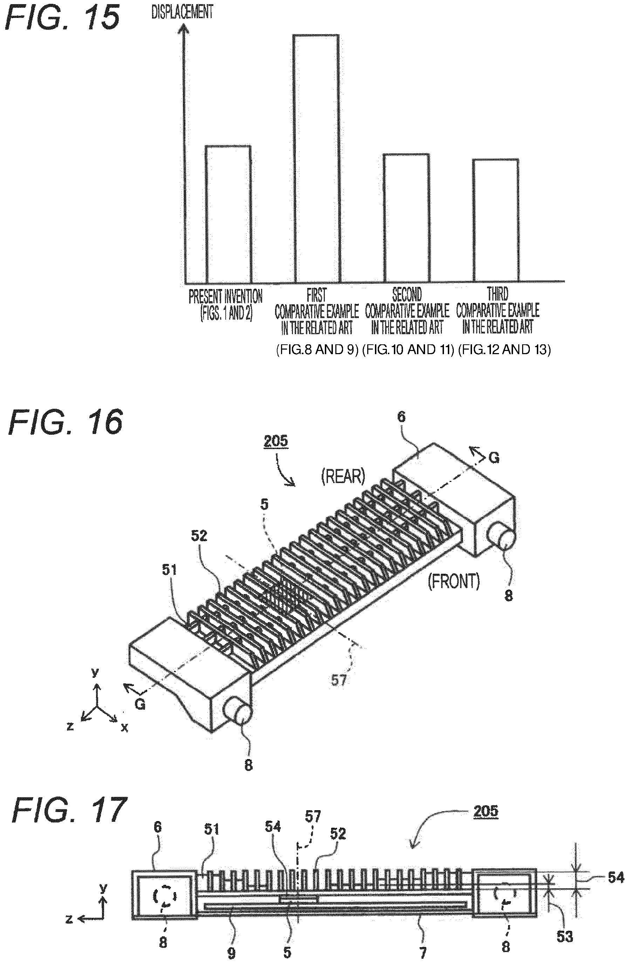

FIGS. 14 and 15 are diagrams in which the simulation results of heat dissipation and rigidity are compared between the camera device according to the present embodiment and the camera devices according to the related art shown as the first to third comparative examples, FIG. 14 is a diagram in which heat dissipation is compared, and FIG. 15 is a diagram in which rigidity is compared.

FIG. 14 shows the temperature of the imaging element as an index for comparing the heat dissipation of the camera device. Therefore, it can be said that the heat dissipation is low when the temperature of the imaging element is high, and the heat dissipation is high when the temperature is low. Further, FIG. 15 shows the displacement of the camera device as an index for comparing the rigidity of the camera device. Here, the displacement of the camera device is a displacement from the initial position when, for example, the center of a pair of left and right camera modules is fixed and a prescribed force is applied to one of the camera modules. Therefore, it can be said that the rigidity is low when the displacement of the camera device is large, and the rigidity is high when the displacement is small.

As shown in FIG. 14, for the heat dissipation of the camera device, the configuration (see FIGS. 1 and 2) of the camera device 200 according to the present invention and the configuration (see FIGS. 8 and 9) of the camera device 201 of the first comparative example including the ribs 22 extending in the front-rear direction (the direction along the x-axis) have relatively high and the same degree of heat dissipation, and the configuration (see FIGS. 10 and 11) of the camera device 202 of the second comparative example including ribs 31 extending in the left-right direction (direction along the z-axis) and the configuration (FIGS. 12 and 13) of the camera device 204 of the third comparative example including the ribs 41 and 42 extending in the left-right direction and the front-rear direction have relatively low and the same degree of heat dissipation.

As shown in FIG. 15, for the rigidity of the camera device, the configuration (see FIGS. 1 and 2) of the camera device 200 according to the present invention, the configuration (see FIGS. 10 and 11) of the camera device 202 of the second comparative example including ribs 31 extending in the left-right direction (direction along the z-axis), and the configuration (FIGS. 12 and 13) of the camera device 204 of the third comparative example including the ribs 41 and 42 extending in the left-right direction and the front-rear direction have relatively high and the same degree of rigidity, and the configuration (see FIGS. 8 and 9) of the camera device 201 of the first comparative example including the ribs 22 extending in the front-rear direction (the direction along the x-axis) has relatively low rigidity.

That is, as shown in FIGS. 14 and 15, the camera device 200 according to the present embodiment has the level of characteristics same as those of the best results for both heat dissipation and rigidity, compared with the camera devices 201 to 203 of the first to third comparative examples. It can be said that it has the most suitable characteristics when considering both heat dissipation and rigidity. None of the camera devices 201 to 203 of the first to third comparative examples show good results in both heat dissipation and rigidity, and for them, when one characteristic is high, the other characteristic is extremely low. For example, the camera device 201 of the first comparative example has high heat dissipation, but has extremely low rigidity. Further, the camera devices 202 and 203 of the second and third comparative examples have high rigidity, but have extremely low heat dissipation.

Therefore, the camera device 200 of the present embodiment includes the pair of left and right camera modules 8 and 8, the circuit board 9 having a function of processing images captured by the camera modules 8 and 8, the first and second cases 6 and 7 that integrally contain the camera modules 8 and 8 and the circuit board 9 along at least the circuit board, the plurality of first ribs 11 formed so as to extend along the direction (z axis) perpendicular to the optical axis of the camera modules 8 and 8, and have a lower height as they are away from the camera module 8 and 8 where the plurality of first ribs 11 is disposed on the face along the circuit board 9 outside the first case 6, and the plurality of second ribs 12 formed so as to intersect with the plurality of first ribs 11. As a result, it is possible to effectively dissipate the heat of the circuit element 5 to the outside by reducing the flow path resistance of the air at the low portion of the first ribs 11 and increasing the flow rate of the air flowing between the second ribs 12. In addition, the rigidity of the camera device can be improved by the first ribs 11, and the deviation (parallax deviation) of the optical axis of the camera modules 8 and 8 due to the deformation of the camera device 200 can be suppressed. That is, temperature rise and thermal deformation of the housing can be suppressed, and reliability can be improved.

Further, since several kinds of heights are provided as the height 13 of the first rib 11, and are lowered stepwise, it is possible not to disturb the air flow at the end face of the first rib 11 (the end in the y direction), and the flow rate of air can be increased.

That is, since it is possible to effectively dissipate the heat of the circuit element 5 in the camera device 200 to the outside by increasing the flow rate of air, and the temperature rise of the circuit element 5 can be suppressed, the reliability of the operation of the camera device 200 can be improved.

In the present embodiment, although the case where one circuit element 5 is provided is described as an example, the present invention is not limited to this. For example, the configuration may be such that a plurality of circuit elements that requires heat dissipation is mounted on the circuit board 9, and the first ribs 11 have a lower height toward the position of each circuit element, that is, there is a plurality of positions where the first ribs 11 have the lowest height corresponding to the position of each circuit element.

### <Second Embodiment>

A second embodiment of the present invention will be described with reference to FIGS. 16 and 17. In the present embodiment, only the differences from the first embodiment will be described, and the members in the drawings used in the present embodiment same as those in the first embodiment are designated by the same reference numerals and the description thereof will be omitted.

In the present embodiment, the circuit element is not located at the center between the pair of left and right camera modules, but is disposed at a position toward one camera module, and the first ribs have heights that are lowered stepwise toward the circuit element.

FIGS. 16 and 17 are views showing the external appearance of the camera device according to the present embodiment, FIG. 16 is an upper perspective view, and FIG. 17 is a sectional view taken along line G-G in FIG. 16.

In FIG. 16 and FIG. 17, the description will be made with an orthogonal coordinate system set in which the x-axis is the front-rear direction (the optical axis direction of the camera module) of the camera device 205 with the front direction as positive, the y-axis is the vertical direction with the upward direction as positive, and the x-axis is the left-right direction with the right direction as positive, and the z-axis is the direction perpendicular to the plane (the zy plane) defined by the x-axis and the y-axis with the right direction as positive.

As shown in FIGS. 16 and 17, the camera device 205 includes at least one (in the present embodiment, an example of the two consisting of a pair of left and right camera modules) camera modules 8 and 8, the circuit board 9 having a function of processing an image captured by the camera modules 8 and 8, and the case (a first case 6 and a second case 7) integrally containing the camera modules 8 and 8 and the circuit board 9 along at least the circuit board 9.

In the embodiment, on the upper face of the circuit board 9, a position 57 of the center of the circuit element 5 in the x-axis direction is disposed closer to the one camera module 8 (right side: positive direction of the z-axis) than the center between the pair of left and right camera modules 8 and 8.

A plurality of first ribs 51 is formed on the face (upper face) along the circuit board 9 outside the first case 6 so as to extend along the direction perpendicular to the optical axis of the pair of left and right camera modules 8 and 8 and the direction along (the z-axis direction) the straight line passing through the pair of left and right camera modules 8 and 8, and to have a height, from the first case 6, that is the lowest between the pair of left and right camera modules 8 and 8 as they are away from the camera modules 8 and 8.

More specifically, the plurality of first ribs 51 is plate-shaped reinforcing members formed so as to rise from the upper face of the first case 6, is disposed side by side at equal intervals in the front-rear direction (the x-axis direction) of the camera device 205, and has heights, from the first case 6, that are lowered stepwise toward the position where the circuit element 5 is disposed. That is, the first ribs 51 are formed stepwise so that a height 53 from the first case 6 at a position (here, a position toward the circuit element 5 closer to the one (the right side: the positive direction of the z-axis) camera module 8 than the center in the left and right direction) away from the camera modules 8 and 8 is lower than a height 54 at a position close to the pair of left and right camera modules 8 and 8.

A plurality of second ribs 52 is formed on the face (upper face) along the circuit board 9 outside the first case 6 so as to intersect with the plurality of first ribs 51.

More specifically, the plurality of second ribs 52 is plate-shaped reinforcing members formed so as to rise from the upper face of the first case 6, is formed so as to extend along the front-rear direction (the x-axis direction) of the camera device 205, and is disposed side by side at equal intervals in the left-right direction (the z-axis direction) of the camera device 205.

Other configurations are similar to those of the first embodiment.

Also in the present embodiment configured as described above, the same effect as that of the first embodiment can be obtained.

Also, even when the circuit element 5 is not located at the center between the pair of left and right camera modules 8 and 8 and is disposed at a position toward one camera module, the configuration is made so that the position at which the first ribs 51 have the lowest height is located in the vicinity of the circuit element 5, so that it is possible to increase the flow rate of air in the vicinity of the circuit element 5, and the heat dissipation efficiency can be improved, resulting in that the reliability of the camera device 205 can be further improved.

### <Third embodiment>

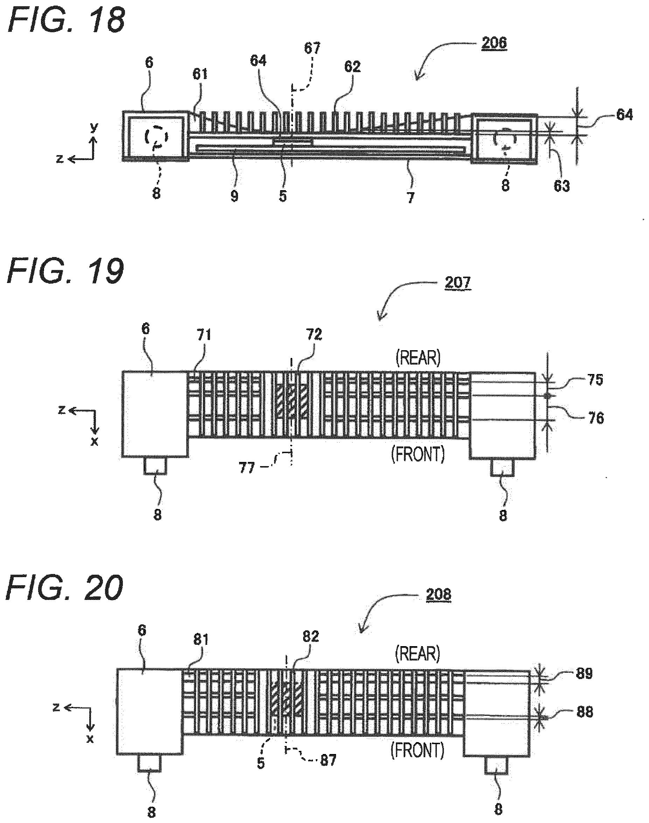

A third embodiment of the present invention will be described with reference to FIG. 18. In the present embodiment, only the differences from the second embodiment will be described, and the members in the drawings used in the present embodiment same as those in the second embodiment are designated by the same reference numerals and the description thereof will be omitted.

In the present embodiment, the circuit element is not located at the center between the pair of left and right camera modules, but is disposed at a position toward one camera module, and the first ribs have heights that are gradually lowered toward the circuit element.

FIG. 18 is a y-z plane cross-sectional view schematically showing the camera device according to the present embodiment. In FIG. 18, the description will be made with an orthogonal coordinate system set in which the x-axis is the front-rear direction (the optical axis direction of the camera module) of a camera device 206 with the front direction as positive, the y-axis is the vertical direction with the upward direction as positive, and the x-axis is the left-right direction with the right direction as positive, and the z-axis is the direction perpendicular to the plane (the zy plane) defined by the x-axis and the y-axis with the right direction as positive.

A plurality of first ribs 61 is formed on the face (upper face) along the circuit board 9 outside the first case 6 so as to extend along the direction perpendicular to the optical axis of the pair of left and right camera modules 8 and 8 and the direction (the z-axis direction) along the straight line passing through the pair of left and right camera modules 8 and 8, and to have a height, from the first case 6, that is the lowest between the pair of left and right camera modules 8 and 8 as they are away from the camera modules 8 and 8.

More specifically, the plurality of first ribs 61 is plate-shaped reinforcing members formed so as to rise from the upper face of the first case 6, is disposed side by side at equal intervals in the front-rear direction (the x-axis direction) of the camera device 206, and has heights, from the first case 6, that are gradually lowered toward the position where the circuit element 5 is disposed.

The upper side of the first rib 61 is not a straight line, but a curved line that is convex downward. The first ribs 61 are formed stepwise so that a height 63 from the first case 6 at a position (here, a position 67 of the center of the circuit element 5 closer to the one (the right side: the positive direction of the z-axis) camera module 8 than the center in the left and right direction) away from the camera modules 8 and 8 is lower than a height 64 at a position close to the pair of left and right camera modules 8 and 8.

A plurality of second ribs 62 is formed on the face (upper face) along the circuit board 9 outside the first case 6 so as to intersect with the plurality of first ribs 61.

More specifically, the plurality of second ribs 62 is plate-shaped reinforcing members formed so as to rise from the upper face of the first case 6, is formed so as to extend along the front-rear direction (the x-axis direction) of the camera device 206, and is disposed side by side at equal intervals in the left-right direction (the z-axis direction) of the camera device 206.

Other configurations are similar to those of the second embodiment.

Also in the present embodiment configured as described above, the same effect as that of the second embodiment can be obtained.

Further, since the upper side of the first ribs 61 is configured to be curved, it is possible to omit a portion having a small effect of improving the rigidity of the first rib 61 and to reduce the weight of the camera device 206.

### <Fourth Embodiment>

A fourth embodiment of the present invention will be described with reference to FIG. 19. In the present embodiment, only the differences from the second embodiment will be described, and the members in the drawings used in the present embodiment same as those in the second embodiment are designated by the same reference numerals and the description thereof will be omitted.

The present embodiment is the same as the second embodiment except that the intervals between the plurality of first ribs are formed so as to be narrower toward the rear of the camera device (opposite to the direction in which the pair of left and right camera modules captures an image).

FIG. 19 is a top view schematically showing a camera device according to the present embodiment.

In FIG. 19, the description will be made with an orthogonal coordinate system set in which the x-axis is the front-rear direction (the optical axis direction of the camera module) of a camera device 207 with the front direction as positive, the y-axis is the vertical direction with the upward direction as positive, and the x-axis is the left-right direction with the right direction as positive, and the z-axis is the direction perpendicular to the plane (the zy plane) defined by the x-axis and the y-axis with the right direction as positive.

A plurality of first ribs 71 is formed on the face (upper face) along the circuit board 9 outside the first case 6 so as to extend along the direction perpendicular to the optical axis of the pair of left and right camera modules 8 and 8 and the direction (the z-axis direction) along the straight line passing through the pair of left and right camera modules 8 and 8, and to have a height, from the first case 6, that is the lowest between the pair of left and right camera modules 8 and 8 as they are away from the camera modules 8 and 8.

More specifically, the plurality of first ribs 71 is plate-shaped reinforcing members formed so as to rise from the upper face of the first case 6, is disposed side by side at predetermined intervals in the front-rear direction (the x-axis direction) of the camera device 207, and has heights, from the first case 6, that are lowered stepwise toward the position (a position 77 of the center of the circuit element 5 in the z-axis direction) where the circuit element 5 is disposed.

Further, the intervals of the first ribs 71 in the front-rear direction (the x-axis direction) are narrowed toward the rear of the camera device 207 (opposite to the direction in which the pair of left and right camera modules captures an image, that is, the negative direction of the x-axis), and for example, when three first ribs 71 are formed side by side in the front-rear direction, a distance 75 between the central and rear first ribs 71 is formed to be smaller than a distance 76 between the front and central first ribs 71.

A plurality of second ribs 72 is formed on the face (upper face) along the circuit board 9 outside the first case 6 so as to intersect with a plurality of first ribs 71.

More specifically, the plurality of second ribs 72 is plate-shaped reinforcing members formed so as to rise from the upper face of the first case 6, is formed so as to extend along the front-rear direction (the x-axis direction) of the camera device 207, and is disposed side by side at equal intervals in the left-right direction (the z-axis direction) of the camera device 207.

Other configurations are similar to those of the second embodiment.

Also in the present embodiment configured as described above, the same effect as that of the second embodiment can be obtained.

When there is a difference in rigidity of the camera device 207 in the front-rear direction, that is, for example, when the rigidity of the rear of the first case 6 may be lower than the rigidity of the front (the positive direction of the x-axis) due to the formation of the wiring openings and the like, even in such a case, the rigidity of the front and the rear can be made to be the same by unevenly disposing the first ribs 71 rearward, so that it is possible to suppress the deviation (parallax deviation) of the optical axis of the camera modules 8 and 8 due to the deformation of the camera device 207.

### <Fifth Embodiment>

A fifth embodiment of the present invention will be described with reference to FIG. 20. In the present embodiment, only the differences from the second embodiment will be described, and the members in the drawings used in the present embodiment same as those in the second embodiment are designated by the same reference numerals and the description thereof will be omitted.

The present embodiment is the same as the second embodiment except that the plurality of first ribs is formed to have larger thicknesses as it is disposed at the further rear of the camera device (opposite to the direction in which the pair of left and right camera modules captures an image).

FIG. 20 is a top view schematically showing a camera device according to the present embodiment.

In FIG. 20, the description will be made with an orthogonal coordinate system set in which the x-axis is the front-rear direction (the optical axis direction of the camera module) of a camera device 208 with the front direction as positive, the y-axis is the vertical direction with the upward direction as positive, and the x-axis is the left-right direction with the right direction as positive, and the z-axis is the direction perpendicular to the plane (the zy plane) defined by the x-axis and the y-axis with the right direction as positive.

A plurality of first ribs 81 is formed on the face (upper face) along the circuit board 9 outside the first case 6 so as to extend along the direction perpendicular to the optical axis of the pair of left and right camera modules 8 and 8 and the direction (the z-axis direction) along the straight line passing through the pair of left and right camera modules 8 and 8, and to have a height, from the first case 6, that is the lowest between the pair of left and right camera modules 8 and 8 as they are away from the camera modules 8 and 8.

More specifically, the plurality of first ribs 81 is plate-shaped reinforcing members formed so as to rise from the upper face of the first case 6, is disposed side by side at equal intervals in the front-rear direction (the x-axis direction) of the camera device 208, and has heights, from the first case 6, that are lowered stepwise toward the position (a position 87 of the center of the circuit element 5 in the z-axis direction) where the circuit element 5 is disposed.

Further, the first ribs 81 in the front-rear direction (the x-axis direction) have a larger thickness as they are disposed at the further rear of the camera device 208 (opposite to the direction in which the pair of left and right camera modules captures an image, that is, the negative direction of the x-axis), and for example, when three first ribs 81 are formed side by side in the front-rear direction, a thickness 89 of the rearmost first rib 81 is larger than a thickness 88 between the frontmost first rib 81.

A plurality of second ribs 82 is formed on the face (upper face) along the circuit board 9 outside the first case 6 so as to intersect with the plurality of first ribs 81.

More specifically, the plurality of second ribs 82 is plate-shaped reinforcing members formed so as to rise from the upper face of the first case 6, is formed so as to extend along the front-rear direction (the x-axis direction) of the camera device 208, and is disposed side by side at equal intervals in the left-right direction (the z-axis direction) of the camera device 208.

Other configurations are similar to those of the second embodiment.

Also in the present embodiment configured as described above, the same effect as that of the second embodiment can be obtained.

When there is a difference in rigidity of the camera device 208 in the front-rear direction, that is, for example, when the rigidity of the rear of the first case 6 may be lower than the rigidity of the front (the positive direction of the x-axis) due to the formation of the wiring openings and the like, even in such a case, the rigidity of the front and the rear can be made to be the same since the first ribs 71 have a larger thickness as they are disposed further rearward, so that it is possible to suppress the deviation (parallax deviation) of the optical axis of the camera modules 8 and 8 due to the deformation of the camera device 208.

### <Sixth embodiment>

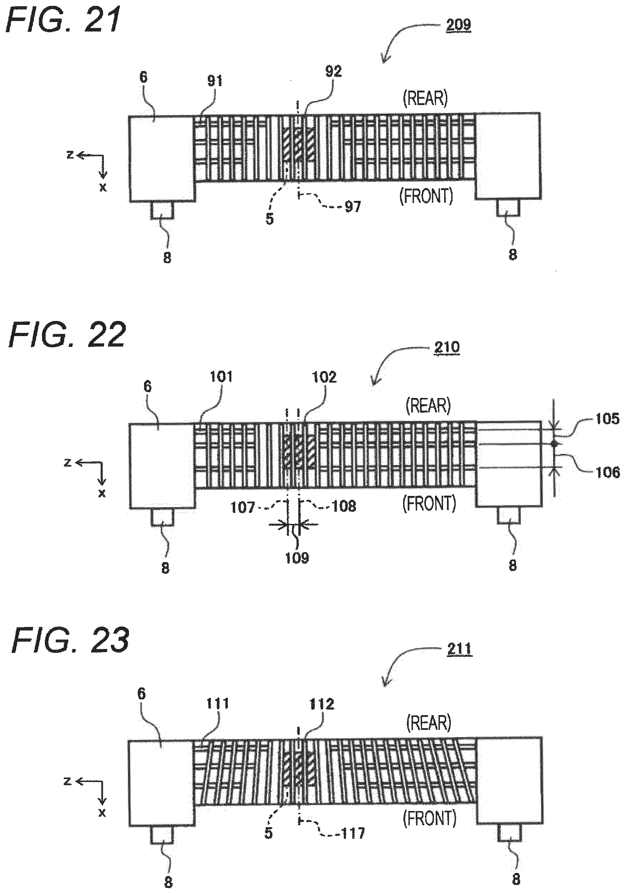

A sixth embodiment of the present invention will be described with reference to FIG. 21. In the present embodiment, only the differences from the second embodiment will be described, and the members in the drawings used in the present embodiment same as those in the second embodiment are designated by the same reference numerals and the description thereof will be omitted.

The present embodiment is the same as the second embodiment except that the plurality of first ribs is formed to have heights that are lowered toward the front of the camera device (the direction in which the pair of left and right camera modules captures an image).

FIG. 21 is a top view schematically showing a camera device according to the present embodiment.

In FIG. 21, the description will be made with an orthogonal coordinate system set in which the x-axis is the front-rear direction (the optical axis direction of the camera module) of a camera device 209 with the front direction as positive, the y-axis is the vertical direction with the upward direction as positive, and the x-axis is the left-right direction with the right direction as positive, and the z-axis is the direction perpendicular to the plane (the zy plane) defined by the x-axis and the y-axis with the right direction as positive.

A plurality of first ribs 91 is formed on the face (upper face) along the circuit board 9 outside the first case 6 so as to extend along the direction perpendicular to the optical axis of the pair of left and right camera modules 8 and 8 and the direction (the z-axis direction) along the straight line passing through the pair of left and right camera modules 8 and 8, and to have a height, from the first case 6, that is the lowest between the pair of left and right camera modules 8 and 8 as they are away from the camera modules 8 and 8.

More specifically, the plurality of first ribs 91 is plate-shaped reinforcing members formed so as to rise from the upper face of the first case 6, is disposed side by side at equal intervals in the front-rear direction (the x-axis direction) of the camera device 209, and has heights, from the first case 6, that are lowered stepwise toward the position (a position 97 of the center of the circuit element 5 in the z-axis direction) where the circuit element 5 is disposed.

Further, the first ribs 91 are formed to have a lower height in the y-axis direction as they are disposed at the further front of the camera device 208 (the direction in which the pair of left and right camera modules captures an image, that is, the positive direction of the x-axis). In this case, assuming that the first ribs 91 have the same degree of lowering toward the position 97 of the first ribs 91, the first ribs 91 disposed further forward have a shorter length in the z-axis direction.

A plurality of second ribs 92 is formed on the face (upper face) along the circuit board 9 outside the first case 6 so as to intersect with the plurality of first ribs 91.

More specifically, the plurality of second ribs 92 is plate-shaped reinforcing members formed so as to rise from the upper face of the first case 6, is formed so as to extend along the front-rear direction (the x-axis direction) of the camera device 209, and is disposed side by side at equal intervals in the left-right direction (the z-axis direction) of the camera device 209.

Other configurations are similar to those of the second embodiment.

Also in the present embodiment configured as described above, the same effect as that of the second embodiment can be obtained.

Further, since the plurality of first ribs 91 is formed to have lower heights toward the front, it is possible not to disturb the flow of air at the end face of the first rib 11 (the end in the z-axis direction), and the flow rate of air can be increased. That is, since it is possible to effectively dissipate the heat of the circuit element 5 in the camera device 209 to the outside by increasing the flow rate of air, and the temperature rise of the circuit element 5 can be suppressed, the reliability of the operation of the camera device 209 can be improved.

When there is a difference in rigidity of the camera device 209 in the front-rear direction, that is, for example, when the rigidity of the rear of the first case 6 may be lower than the rigidity of the front (the positive direction of the x-axis) due to the formation of the wiring openings and the like, even in such a case, the rigidity of the front and the rear can be made to be the same since the first ribs 91 have a larger length as they are disposed further rearward, and have a smaller length as they are further frontward so that it is possible to suppress the deviation (parallax deviation) of the optical axis of the camera modules 8 and 8 due to the deformation of the camera device 209.

In the present embodiment, although the case where the degree to which the plurality of first ribs 91 has a lower height toward the position 97 is the same is described, the configuration may be made so that for example, the ends, of the plurality of first ribs 91 disposed side by side in the front-rear direction, near the camera modules 8 and 8 have the same height, and other portions have a lower height toward the front, that is, in the first ribs 71 disposed further forward, the degree to which the plurality of first ribs has a lower height toward the circuit element 5 is steep.

### <Seventh Embodiment>

A seventh embodiment of the present invention will be described with reference to FIG. 22. In the present embodiment, only the differences from the fourth embodiment will be described, and the members in the drawings used in the present embodiment same as those in the fourth embodiment are designated by the same reference numerals and the description thereof will be omitted.

The present embodiment is the same as the fourth embodiment except that the plurality of first ribs is formed to have heights that are lowered toward a position closer to the one camera module (of the pair of left and right camera modules, one camera module closer to the circuit element) than the circuit element.

FIG. 22 is a top view schematically showing a camera device according to the present embodiment.

In FIG. 22, the description will be made with an orthogonal coordinate system set in which the x-axis is the front-rear direction (the optical axis direction of the camera module) of a camera device 210 with the front direction as positive, the y-axis is the vertical direction with the upward direction as positive, and the x-axis is the left-right direction with the right direction as positive, and the z-axis is the direction perpendicular to the plane (the zy plane) defined by the x-axis and the y-axis with the right direction as positive.

A plurality of first ribs 101 is formed on the face (upper face) along the circuit board 9 outside the first case 6 so as to extend along the direction perpendicular to the optical axis of the pair of left and right camera modules 8 and 8 and the direction (the z-axis direction) along the straight line passing through the pair of left and right camera modules 8 and 8, and to have a height, from the first case 6, that is the lowest between the pair of left and right camera modules 8 and 8 as they are away from the camera modules 8 and 8.

More specifically, the plurality of first ribs 101 is plate-shaped reinforcing members formed so as to rise from the upper face of the first case 6, is disposed side by side at predetermined intervals in the front-rear direction of the camera device 210 (the x-axis direction), and has heights, from the first case 6, that are lowered stepwise toward a position 107 that is located closer to the one camera module 8 (of the pair of left and right camera modules 8 and 8, one camera module 8 that is close to the circuit element 5) than a position (a position 108 of the center of the circuit element 5 in the z-axis direction) where the circuit element 5 is disposed by a distance 109.

Further, the intervals of the first ribs 101 in the front-rear direction (the x-axis direction) are narrowed toward the rear of the camera device 210 (opposite to the direction in which the pair of left and right camera modules captures an image, that is, the negative direction of the x-axis), and for example, when three first ribs 101 are formed side by side in the front-rear direction, a distance 105 between the central and rear first ribs 101 is formed to be smaller than a distance 106 between the front and central first ribs 101.

A plurality of second ribs 102 is formed on the face (upper face) along the circuit board 9 outside the first case 6 so as to intersect with the plurality of first ribs 101.

More specifically, the plurality of second ribs 102 is plate-shaped reinforcing members formed so as to rise from the upper face of the first case 6, is formed so as to extend along the front-rear direction (the x-axis direction) of the camera device 210, and is disposed side by side at equal intervals in the left-right direction (the z-axis direction) of the camera device 210.

Other configurations are similar to those of the fourth embodiment.

Also in the present embodiment configured as described above, the same effect as that of the fourth embodiment can be obtained.

In addition, since the plurality of first ribs 101 are formed to have heights, from the first case 6, that are lowered stepwise toward a position 107 which is closer to the one camera module 8 (of the pair of left and right camera modules 8 and 8, one camera module 8 that is close to the circuit element 5) than the position (the position 108 of the center of the circuit element 5 in the z-axis direction) where the circuit element 5 is disposed by a distance 109, the position 107 can be adjusted according to the positional relationship between the circuit element 5 and each of the pair of left and right camera modules 8 and 8, so that it is possible to make the temperatures of the pair of left and right camera modules 8 and 8 equal.

Further, it is possible to reduce the difference in temperature between the respective components of the camera device 210, in other words, it is possible to suppress the uneven temperature distribution and make it flatter, and it is possible to reduce the deformation of the camera device 210, so that it is possible to provide the highly reliable camera device 210 that suppresses the occurrence of measurement failures and operation failures.

### <Eighth Embodiment>

An eighth embodiment of the present invention will be described with reference to FIG. 23. In the present embodiment, only the differences from the sixth embodiment will be described, and the members in the drawings used in the present embodiment same as those in the sixth embodiment are designated by the same reference numerals and the description thereof will be omitted.

The present embodiment is the same as the sixth embodiment except that the intervals of the plurality of second ribs in the left-right direction (the z-axis direction) are formed to be narrower at least around the circuit element toward the rear (the negative direction of the x-axis, which is a direction opposite to the direction in which the pair of left and right camera modules captures an image) of the camera device.

FIG. 23 is a top view schematically showing a camera device according to the present embodiment.

In FIG. 23, the description will be made with an orthogonal coordinate system set in which the x-axis is the front-rear direction (the optical axis direction of the camera module) of a camera device 211 with the front direction as positive, the y-axis is the vertical direction with the upward direction as positive, and the x-axis is the left-right direction with the right direction as positive, and the z-axis is the direction perpendicular to the plane (the zy plane) defined by the x-axis and the y-axis with the right direction as positive.

A plurality of first ribs 111 is formed on the face (upper face) along the circuit board 9 outside the first case 6 so as to extend along the direction perpendicular to the optical axis of the pair of left and right camera modules 8 and 8 and the direction (the z-axis direction) along the straight line passing through the pair of left and right camera modules 8 and 8, and to have a height, from the first case 6, that is the lowest between the pair of left and right camera modules 8 and 8 as they are away from the camera modules 8 and 8.

More specifically, the plurality of first ribs 111 is plate-shaped reinforcing members formed so as to rise from the upper face of the first case 6, is disposed side by side at equal intervals in the front-rear direction (the x-axis direction) of the camera device 211, and has heights, from the first case 6, that are lowered stepwise toward the position (a position 117 of the center of the circuit element 5 in the z-axis direction) where the circuit element 5 is disposed.

Further, the first ribs 111 are formed to have a lower height in the y-axis direction as they are disposed at the further front of the camera device 211 (the direction in which the pair of left and right camera modules captures an image, that is, the positive direction of the x-axis).

A plurality of second ribs 112 is formed on the face (upper face) along the circuit board 9 outside the first case 6 so as to intersect with the plurality of first ribs 111.

More specifically, the plurality of second ribs 112 is plate-shaped reinforcing members formed so as to rise from the upper face of the first case 6, is formed so as to extend along the front-rear direction (the x-axis direction) of the camera device 211, and has intervals in the left-right direction (the z-axis direction) that are formed to be narrower at least around the circuit element 5 toward the rear (the negative direction of the x-axis, which is a direction opposite to the direction in which the pair of left and right camera modules 8 and 8 captures an image) of the camera device 211. However, the plurality of second ribs 112 is formed so as to maintain a predetermined distance or more that does not hinder the flow of air.

Other configurations are similar to those of the sixth embodiment.

Also in the present embodiment configured as described above, the same effect as that of the sixth embodiment can be obtained.

When the camera device 211 is mounted on a vehicle such as an automobile, the camera device 211 may be covered with a cover from the viewpoint of protecting the camera device 211, and making it difficult for the driver or the like to see it (so-called aesthetics). At this time, it is possible to increase the flow rate of air by disposing the second ribs 112 along the air flowing in the cover to reduce the flow resistance of the air, and the heat of the circuit element of the camera device 211 can be efficiently dissipated to the outside. That is, when the air inlet of the cover is disposed at the front, and the outlet is disposed at the rear, the second ribs 112 are disposed along the direction from the air inlet to the air outlet, so that the air flow resistance can be reduced.

In addition, it is conceivable that the camera device 211 may include a cooling fan to discharge the air inside the cover from the outlet. At this time, the second ribs 112 are disposed so as to extend from the air inlet of the cover toward the outlet, so that effective heat dissipation is possible. For example, in FIG. 23, a case where the second ribs 112 are radially disposed (when viewed from the outlet side) toward the cooling fan at the outlet from the inlet of the cover when the cooling fan is disposed at the position 117 of the camera device 211 in the z-axis direction, and near the outlet provided at the rear of the cover is illustrated. In this case, the flow resistance of the air is reduced by rectifying the flow of air, and the flow rate of air can be increased. That is, since it is possible to effectively dissipate the heat of the circuit element 5 in the camera device 211 to the outside by increasing the flow rate of air, and, for example, the temperature of the circuit element 5 can be kept within the guaranteed operating temperature range, the reliability of the operation of the camera device 211 can be improved.

### <Example not part of the invention>

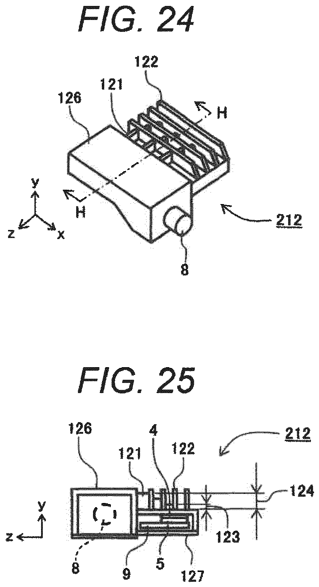

An example not part of the present invention will be described with reference to FIGS. 24 and 25. In the present example, only the differences from the second embodiment will be described, and the members in the drawings used in the present example same as those in the second embodiment are designated by the same reference numerals and the description thereof will be omitted.

The present example is the same as the second embodiment except that only one camera module is provided.

FIGS. 24 and 25 are diagrams schematically showing the camera device according to the present example, FIG. 24 is an upper perspective view, and FIG. 25 is a sectional view taken along line H-H in FIG. 24. In FIG. 24 and FIG. 25, the description will be made with an orthogonal coordinate system set in which the x-axis is the front-rear direction (the optical axis direction of the camera module) of a camera device 212 with the front direction as positive, the y-axis is the vertical direction with the upward direction as positive, and the x-axis is the left-right direction with the right direction as positive, and the z-axis is the direction perpendicular to the plane (the zy plane) defined by the x-axis and the y-axis with the right direction as positive.

As shown in FIGS. 24 and 25, the camera device 212 includes one (in the present example, an example of the left (the positive direction of the z-axis) one is shown) camera module 8, the circuit board 9 having a function of processing an image captured by the camera module 8, and the case (a first case 126 and a second case 127) integrally containing the camera modules 8 and the circuit board 9 along at least the circuit board 9.

The circuit board 9 is a plate-like member that is disposed with the respective faces facing each other in vertical direction, and the camera module 8 is disposed at the end in one (the positive direction of the z-axis) of the left-right direction. At least one (in the present example, one) circuit element 5 (signal processing element) that performs image processing of an image captured by the camera module 8 is disposed on any one of the faces of the circuit board 9. The camera module 8 includes an imaging element, and is disposed with its optical axis oriented in the imaging direction (here, front in the x-axis direction).

The circuit element 5 is a microcomputer that processes image signals, a signal processing element, a field programmable gate array (FPGA), or the like, and refers to an element (heat generating component) generating a large amount of heat which requires heat conduction to the first case 126 and the second case 127. That is, the circuit element 5 mounted on the upper face of the circuit board 9 is a heat generating component, and is thermally connected to the first case 126 via a heat conducting member 4 such as a heat dissipation gel. In the example, the case where the circuit element 5 is mounted on the upper face of the circuit board 9 will be described as an example.

The circuit board 9 is contained by a case consisting of the first case 126 that covers the circuit board 9 together with the camera module 8 from above and the second case 127 that covers the circuit board 9 from below, and the second case 127 is fixed to the first case 126 with, for example, a screw.

The plurality of first ribs 121 is formed on the face (upper face) along the circuit board 9 outside the first case 126 so as to extend along the direction perpendicular to the optical axis of the camera module 8 (the z-axis direction), and have heights, from the first case 126, that are lowered as they are away from the camera module 8.

More specifically, the plurality of first ribs 121 is plate-shaped reinforcing members formed so as to rise from the upper face of the first case 126, is disposed side by side at equal intervals in the front-rear direction (the x-axis direction) of the camera device 212, and has heights, from the first case 126, that are lowered stepwise toward the position where the circuit element 5 is disposed. That is, the first ribs 121 are formed stepwise so that a height 123 from the first case 126 at a position (here, a position toward the circuit element 5) away from the camera module is lower than a height 124 at a position close to the camera module 8.

A plurality of second ribs 122 is formed on the face (upper face) along the circuit board 9 outside the first case 126 so as to intersect with the plurality of first ribs 121.

More specifically, the plurality of second ribs 122 is plate-shaped reinforcing members formed so as to rise from the upper face of the first case 126, is formed so as to extend along the front-rear direction (the x-axis direction) of the camera device 212, and is disposed side by side at equal intervals in the left-right direction (the z-axis direction) of the camera device 212.

Other configurations are similar to those of the second embodiment.

Also in the present example configured as described above, the same effect as that of the second embodiment can be obtained.

### <Supplementary Note >

The present invention is not limited to the above embodiments, and various modifications and combinations are included. Further, the present invention is not limited to the embodiment including all the configurations described in the above-described embodiments, and may include the embodiment in which part of the configuration is deleted.

For example, the configuration of narrowing the intervals of the first ribs 71 toward the rear as shown in the fourth embodiment can be applied to other embodiments. Further, the configuration in which the first ribs 71 are thicker toward the rear as shown in the fifth embodiment can also be applied to other embodiments. Furthermore, the configuration in which the position at which the first ribs 101 have the lowest height is different from the position 108 of the center of the circuit element 5 as shown in the seventh embodiment is also applied to other embodiments.

### Reference Signs List

4 heat conducting member
5 circuit element (signal processing element)
6,126 first case
7,127 second case
8 camera module
8a optical axis
9 circuit board
11,51,61,71,81,91,101,111,121 first rib
12,52,62,72,82,92,102,112,122 second rib
22,31,41,42 rib
57,67,77,87,97,107,108,117 position
75,76,105,106,109 distance
200-212 camera device

## Claims

1. A camera device comprising:
at least one camera module (8);
a circuit board (9) having a function of processing an image captured by the camera module (8);
a case that integrally contains the camera module (8) and the circuit board (9) along at least the circuit board (9) ;
a plurality of first ribs (11) formed so as to extend along a direction perpendicular to an optical axis of the camera module (8) and to have a portion with a height from the case lower than a height at a position close to the camera module (8), the plurality of first ribs (11) being disposed on a face of the case along the circuit board (9) outside the case; and
a plurality of second ribs (12) formed so as to intersect with the plurality of first ribs (11);
wherein the camera module (8) is a pair of left and right camera modules, and
the plurality of first ribs (11) is formed so as to extend along a direction along a straight line passing through the pair of left and right camera modules (8), the plurality of first ribs (11) having a height, from the case, that is lowest between the pair of left and right camera modules (8) as the first ribs (11) are away from the pair of left and right camera modules (8);
**characterized in that**
the camera device is further comprising a signal processing element (5) that is mounted on the circuit board (9), and that processes an image captured by the pair of left and right camera modules (8), wherein
the plurality of first ribs (11) has heights, from the case, that are lowered toward a position where the signal processing element (5) is disposed.

2. The camera device (200) according to claim 1, wherein the plurality of first ribs (11) has heights, from the case, that are lowered stepwise as the first ribs (11) are away from the camera modules (8).

3. The camera device (200) according to claim 1, wherein
the signal processing element (5) is disposed closer to one camera module (8) than a center position between the pair of left and right camera modules (8), and
a portion, of the plurality of first ribs (11), that has a lowest height from the case is located closer to the one camera module (8) than a position where the signal processing element (5) is disposed.

4. The camera device (200) according to claim 1, wherein the plurality of first ribs (11) is formed to have intervals that are narrowed toward a direction opposite to a direction in which the pair of left and right camera modules (8) captures an image.

5. The camera device (200) according to claim 1, wherein the plurality of first ribs (11) is formed to have a thickness that increases toward a direction opposite to a direction in which the pair of left and right camera modules (8) captures an image.

6. The camera device (200) according to claim 1, wherein the plurality of first ribs (11) is formed to have lower heights toward a front of the camera device (200).

7. The camera device (200) according to claim 1, further comprising a signal processing element (5) that is mounted on the circuit board (9), and that processes an image captured by the pair of left and right camera modules (8), wherein
the plurality of second ribs (12) is formed to have intervals that are narrowed toward a direction opposite to a direction in which the pair of left and right camera modules (8) captures an image at least at a position of the signal processing element (5) in a direction along a straight line passing through the pair of left and right camera modules (8).

## Patentansprüche

1. Kameravorrichtung, die umfasst:
mindestens ein Kameramodul (8);
eine Leiterplatte (9) mit einer Funktion zum Verarbeiten eines Bilds, das durch das Kameramodul (8) aufgenommen wird;
ein Gehäuse, das das Kameramodul (8) und die Leiterplatte (9) entlang zumindest der Leiterplatte (9) fest eingebaut enthält;
mehrere erste Rippen (11), die so gebildet sind, dass sie sich entlang einer Richtung senkrecht zu einer optischen Achse des Kameramoduls (8) erstrecken und einen Teil mit einer Höhe ausgehend von dem Gehäuse besitzen, die niedriger als eine Höhe an einer Position in der Nähe des Kameramoduls (8) ist, wobei die mehreren ersten Rippen (11) auf einer Seite des Gehäuses entlang der Leiterplatte (9) außerhalb des Gehäuses angeordnet sind; und
mehrere zweite Rippen (12), die so gebildet sind, dass sie sich mit den mehreren ersten Rippen (11) kreuzen;
wobei das Kameramodul (8) ein Paar eines linken und eines rechten Kameramoduls ist und
die mehreren ersten Rippen (11) so gebildet sind, dass sie sich entlang einer Richtung entlang einer geraden Linie, die durch das Paar des linken und des rechten Kameramoduls (8) führt, erstrecken, wobei die mehreren ersten Rippen (11) eine Höhe ausgehend von dem Gehäuse besitzen, die zwischen dem Paar des linken und des rechten Kameramoduls (8) am niedrigsten ist, wenn die ersten Rippen (11) von dem Paar des linken und des rechten Kameramoduls (8) entfernt sind;
**dadurch gekennzeichnet, dass**
die Kameravorrichtung ferner ein Signalverarbeitungselement (5) umfasst, das auf der Leiterplatte (9) angebracht ist und das ein Bild verarbeitet, das durch das Paar des linken und des rechten Kameramoduls (8) aufgenommen wird, wobei
die mehreren ersten Rippen (11) Höhen ausgehend von dem Gehäuse besitzen, die in Richtung einer Position, wo das Signalverarbeitungselement (5) angeordnet ist, erniedrigt sind.

2. Kameravorrichtung (200) nach Anspruch 1, wobei die mehreren ersten Rippen (11) Höhen ausgehend von dem Gehäuse besitzen, die schrittweise erniedrigt sind, wenn die ersten Rippen (11) von den Kameramodulen (8) entfernt sind.

3. Kameravorrichtung (200) nach Anspruch 1, wobei
das Signalverarbeitungselement (5) näher an einem Kameramodul (8) als eine mittlere Position zwischen dem Paar des linken und des rechten Kameramoduls (8) angeordnet ist und
sich ein Teil der mehreren ersten Rippen (11), der eine niedrigste Höhe ausgehend von dem Gehäuse besitzt, näher an dem einen Kameramodul (8) als eine Position, an der das Signalverarbeitungselement (5) angeordnet ist, befindet.

4. Kameravorrichtung (200) nach Anspruch 1, wobei die mehreren ersten Rippen (11) so gebildet sind, dass sie Intervalle besitzen, die in einer Richtung entgegengesetzt zu einer Richtung, in der das Paar des linken und des rechten Kameramoduls (8) ein Bild aufnimmt, abnehmen.

5. Kameravorrichtung (200) nach Anspruch 1, wobei die mehreren ersten Rippen (11) so gebildet sind, dass sie eine Dicke besitzen, die in einer Richtung entgegengesetzt zu einer Richtung, in der das Paar des linken und des rechten Kameramoduls (8) ein Bild aufnimmt, zunimmt.

6. Kameravorrichtung (200) nach Anspruch 1, wobei die mehreren ersten Rippen (11) so gebildet sind, dass sie niedrigere Höhen in Richtung einer Vordersite der Kameravorrichtung (200) besitzen.

7. Kameravorrichtung (200) nach Anspruch 1, die ferner ein Signalverarbeitungselement (5) umfasst, das auf der Leiterplatte (9) angebracht ist und das ein Bild verarbeitet, das durch das Paar des linken und des rechten Kameramoduls (8) aufgenommen wird, wobei
die mehreren zweiten Rippen (12) so gebildet sind, dass sie Intervalle besitzen, die in einer Richtung entgegengesetzt zu einer Richtung, in der das Paar des linken und des rechten Kameramoduls (8) ein Bild aufnimmt, an mindestens einer Position des Signalverarbeitungselements (5) in einer Richtung entlang einer geraden Linie, die durch das Paar des linken und des rechten Kameramoduls (8) führt, abnehmen.

## Revendications

1. Dispositif de caméra comprenant :
au moins un module de caméra (8) ;
une carte à circuit (9) ayant une fonction de traitement d'une image capturée par le module de caméra (8) ;
un boîtier qui contient intégralement le module de caméra (8) et la carte à circuit (9) au moins le long de la carte à circuit (9) ;
une pluralité de premières nervures (11) formées de manière à s'étendre le long d'une direction perpendiculaire à un axe optique du module de caméra (8) et pour avoir une portion avec une hauteur par rapport au boîtier plus basse qu'une hauteur à une position proche du module de caméra (8), la pluralité de premières nervures (11) étant disposées sur une face du boîtier le long de la carte à circuit (9) à l'extérieur du boîtier ; et
une pluralité de secondes nervures (12) formées de manière à se recouper avec la pluralité de premières nervures (11) ;
dans lequel le module de caméra (8) est une paire de modules de caméra de gauche et de droite, et
la pluralité de premières nervures (11) sont formées de manière à s'étendre le long d'une direction le long d'une ligne droite passant par la paire de modules de caméra de gauche et droite (8), la pluralité de premières nervures (11) ayant une hauteur, par rapport au boîtier, qui est la plus basse entre la paire de modules de caméra de gauche et droite (8) lorsque les premières rainures (11) sont éloignées de la paire de modules de caméra de gauche et de droite (8) ;
**caractérisé en ce que**
le dispositif de caméra comprend en outre un élément de traitement de signal (5) qui est monté sur la carte à circuit (9), et qui traite une image capturée par la paire de modules de caméra de gauche et droite (8), dans lequel
la pluralité de premières nervures (11) ont des hauteurs, par rapport au boîtier, qui sont abaissées vers une position où l'élément de traitement de signal (5) est disposé.

2. Dispositif de caméra (200) selon la revendication 1, dans lequel la pluralité de premières rainures (11) ont des hauteurs, par rapport au boîtier, qui sont abaissées par paliers lorsque les premières rainures (11) sont éloignées des modules de caméra (8).

3. Dispositif de caméra (200) selon la revendication 1, dans lequel
l'élément de traitement de signal (5) est disposé plus proche de l'un des modules de caméra (8) que d'une position centrale entre la paire de modules de caméra de gauche et de droite (8), et
une portion, parmi la pluralité de premières nervures (11), qui a une hauteur la plus basse par rapport au boîtier est située plus proche de l'un des modules de caméra (8) que d'une position où l'élément de traitement de signal (5) est disposé.

4. Dispositif de caméra (200) selon la revendication 1, dans lequel la pluralité de premières nervures (11) sont formées pour avoir des intervalles qui sont rétrécis vers une direction opposée à une direction dans laquelle la paire de modules de caméra de gauche et droite (8) capturent une image.

5. Dispositif de caméra (200) selon la revendication 1, dans lequel la pluralité de premières nervures (11) sont formées pour avoir une épaisseur qui augmente vers une direction opposée à une direction dans laquelle la paire de modules de caméra de gauche et droite (8) capturent une image.

6. Dispositif de caméra (200) selon la revendication 1, dans lequel la pluralité de premières nervures (11) sont formées pour avoir des hauteurs plus basses vers une partie avant du dispositif de caméra (200).

7. Dispositif de caméra (200) selon la revendication 1, comprenant en outre un élément de traitement de signal (5) qui est monté sur la carte à circuit (9), et qui traite une image capturée par la paire de modules de caméra de gauche et de droite (8), dans lequel
la pluralité de secondes nervures (12) sont formées pour avoir des intervalles qui sont rétrécis vers une direction opposée à une direction dans laquelle la paire de modules de caméra de gauche et de droite (8) capturent une image au moins à une position de l'élément de traitement de signal (5) dans une direction le long d'une ligne droite passant par la paire de modules de caméra de gauche et de droite (8).
